(19) Europäisches Patentamt / European Patent Office / Office européen des brevets

(11) **EP 3 496 398 B1**

(12) **EUROPÄISCHE PATENTSCHRIFT**

(45) Veröffentlichungstag und Bekanntmachung des Hinweises auf die Patenterteilung:
**29.01.2020 Patentblatt 2020/05**

(51) Int Cl.:
*H04N 17/00* *(2006.01)*     *H04N 13/296* *(2018.01)*

(21) Anmeldenummer: **17206347.1**

(22) Anmeldetag: **11.12.2017**

(54) **SICHERE STEREOKAMERA UND VERFAHREN ZUM PRÜFEN DER FUNKTIONSFÄHIGKEIT DER BILDSENSOREN**

SECURE STEREO CAMERA AND METHOD FOR TESTING THE FUNCTIONALITY OF THE IMAGE SENSORS

CAMÉRA STÉRÉO SÉCURISÉE ET PROCÉDÉ DE VÉRIFICATION DE LA CAPACITÉ DE FONCTIONNEMENT DES CAPTEURS D'IMAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.06.2019 Patentblatt 2019/24**

(73) Patentinhaber: **Sick AG**
**79183 Waldkirch (DE)**

(72) Erfinder:
• **HOFMANN, Dr. Christoph**
**79194 Gundelfingen (DE)**
• **SCHOTT, Michael**
**79115 Freiburg (DE)**

(56) Entgegenhaltungen:
**EP-A2- 1 069 536**     **DE-A1-102006 040 349**
**DE-A1-102010 024 666**     **JP-A- 2001 211 466**

EP 3 496 398 B1

**EP 3 496 398 B1**

**Beschreibung**

Die Erfindung betrifft eine sichere Stereokamera und ein Verfahren zum Prüfen der Funktionsfähigkeit der Bildsensoren nach dem Oberbegriff von Anspruch 1 beziehungsweise 15.

3D-Sensoren oder 3D-Kameras nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt. Es existieren zahlreiche 3D-Verfahren, beispielsweise Bildsensoren mit Lichtlaufzeitmessung in ihren Pixeln, Triangulationsverfahren zwischen mehreren Bildern oder zu einem bekannten projizierten Beleuchtungsmuster oder auch Laserscanner mit Scanmechanismen in zwei Achsen.

Ein besonders bekanntes, auf Triangulation beruhendes 3D-Verfahren ist die an das menschliche Sehen mit zwei Augen angelehnte Stereoskopie. Zwei Kameras nehmen ein Bildpaar derselben Szenerie aus unterschiedlicher Perspektive auf. In einem als Disparitätsbereich bezeichneten Suchbereich, der in der Regel durch ein Korrelationsfenster festgelegt ist, werden zueinander korrespondierende Pixel beziehungsweise Bildmerkmale identifiziert. Deren gegenseitiger Versatz oder Disparität stellt ein Maß für die Entfernung dar, so dass in Kenntnis der optischen Parameter der Stereokamera die jeweilige Entfernung berechnet werden kann. Der Zusammenhang zwischen der Entfernung eines Objekts und der zugehörigen Disparität ist nicht linear, sondern hyperbelförmig. Der Disparitätsbereich entspricht dem erfassbaren Entfernungsbereich einer Stereokamera. Stereosysteme können passiv, also allein mit dem Umgebungslicht arbeiten, oder eine eigene Beleuchtung aufweisen, die vorzugsweise ein Beleuchtungsmuster erzeugt, um die Entfernungsschätzung auch in strukturlosen Szenerien zu ermöglichen.

Stereokameras werden auch in sicherheitstechnischen Anwendungen eingesetzt. Das primäre Ziel ist dann, Personen vor Gefahrenquellen zu schützen, wie sie beispielsweise Maschinen im industriellen Umfeld darstellen. Die Maschine wird mit Hilfe der Stereokamera und möglicherweise weiterer Sensoren überwacht, und wenn demnach eine Situation vorliegt, in der eine Person gefährlich nahe an die Maschine zu gelangen droht, wird eine geeignete Absicherungsmaßnahme ergriffen. Ein gängiges Absicherungskonzept sieht vor, dass Schutzfelder konfiguriert werden, die während des Betriebs der Maschine vom Bedienpersonal nicht betreten werden dürfen. Erkennt der Sensor einen unzulässigen Schutzfeldeingriff, etwa ein Bein einer Bedienperson, so löst er einen sicherheitsgerichteten Halt der Maschine aus. Es sind auch Alternativen zu Schutzfeldern bekannt, etwa darauf zu achten, dass zwischen Maschine und Person ein von der Relativbewegung abhängiger Mindestabstand eingehalten ist ("speed and separation monitoring").

Im Sinne der Sicherheitstechnik müssen sichere Sensoren besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile.

Für eine Stereokamera ist die Funktionsfähigkeit der Bildsensoren eine Grundvoraussetzung. Die aktuell aufgenommene Bildinformation muss den äußeren Verhältnissen entsprechen. Das ist nicht ohne weiteres feststellbar, da ein konstantes Bild sowohl Ausdruck einer unveränderten Szenerie als auch eine Fehlfunktion eines Bildsensors sein kann. Es gibt eine Vielzahl möglicher Bildsensorfehler, die zuverlässig aufzudecken sind. Dazu zählen sogenannte "Stuck-At"-Fehler, bei denen Pixel trotz unterschiedlichen Szenerien immer denselben Pixelwert angeben. Ein Sonderfall davon sind die sogenannten Salt-and-Pepper-Fehler, bei denen ein Pixel komplett saturiert (weiß, Salt) oder ganz dunkel bleibt (schwarz, Pepper). Aufgrund der Analogschaltung können auch solche Stuck-At-Pixel noch leicht rauschen. Eine andere Fehlerquelle sind Zeilen- oder Spaltenvertauschungen beim Auslesen, wo dann der Bildkontext gestört ist. Allgemeiner kann es auch dazu kommen, dass irgendwelche Adresszuordnungen nicht stimmen und das Bild wie zerhackt erscheint. Ein Effekt wie von defekten Pixeln kann auch ohne elektronische Ursache durch Verschmutzung der Bildsensoren oder einer ihnen zugeordneten Optik, etwa von Mikrolinsen auf dem Bildsensor, eines Empfangsobjektivs oder einer schützenden Frontscheibe entstehen.

In der EP 1 472 890 B1 wird zum Überprüfen der Funktionssicherheit eines Bildsensors ein aktuelles Rauschmaß der Pixel mit einem Referenzrauschmaß verglichen. Ein solcher Test ist aber nicht aussagekräftig genug, weil auch ein defektes Pixel ein den Erwartungen entsprechendes Rauschen zeigen kann.

Nach der Lehre der US 9 712 768 B2 werden Adressdecoderfehler eines Bildsensors erkannt. Der Ansatz beruht darauf, dass Bildsensoren charakteristische Helligkeitsunterschiede der Pixel (FPN, Fixed Pattern Noise) zeigen. Das FPN eines aktuell aufgenommenen Bildes würde demgegenüber durch Fehlzuordnungen vermischt. Allerdings ist dann das FPN von dem eigentlichen Bild überlagert und nicht mit ausreichender Zuverlässigkeit bewertbar.

Die US 8 953 047 B2 sieht in den Bildsensor integrierte Verifikationsschaltungen vor. Dies macht den Bildsensor aber entsprechend aufwändiger in der Herstellung, und die zusätzlichen Schaltungsteile beanspruchen Fläche auf dem Bildsensor.

Die DE 10 2014 201 161 A1 befasst sich mit einem Verfahren zum Ermitteln eines blinden Bereichs einer Kamera. Dabei werden nacheinander aufgenommene Bilder einer dynamischen Szenerie aufgenommen und ein blinder Bereich dort vermutet, wo sich die Bilder nicht verändern. Dieses Verfahren ist für einen simultanen Test von Bildsensoren einer Stereokamera und eher statische Szenerien ungeeignet.

Aus der EP 1 367 314 B1 ist ein redundantes Kamerasystem mit zwei Kameras bekannt. Die beiden Kameras fungieren aber nicht als Stereokamera zur Erfassung von Tiefenkarten, sondern sind redundante 2D-Kameras. Der Sicherheitsansatz beruht allein auf der Zweikanaligkeit. Die Kameras erfassen über einen Strahlteiler identische Szenerien.

Die JP 2001211466 A offenbart ein Stereosystem mit einer Selbstdiagnosefunktion. Dazu werden Bildmerkmale in dem linken und dem rechten Bild gezählt, und wenn diese Anzahlen nicht übereinstimmen, wird ein Fehler vermutet. Das ist ein relativ grobes Vorgehen. Es ist leicht möglich, dass die Anzahl übereinstimmt, obwohl einzelne Bildmerkmale es nicht tun. Die Bestimmung von Bildmerkmalen kann auch nicht zugleich robust genug für den praktischen Einsatz und sensitiv für einzelne Pixelfehler sein.

Es ist daher Aufgabe der Erfindung, eine verbesserte Funktionsüberprüfung für die Bildsensoren einer Stereokamera anzugeben.

Diese Aufgabe wird durch eine sichere Stereokamera und ein Verfahren zum Prüfen der Funktionsfähigkeit der Bildsensoren nach Anspruch 1 beziehungsweise 15 gelöst. Die Stereokamera weist mindestens zwei Bildsensoren oder Einzelkameras zur Erzeugung von zwei gegeneinander perspektivisch versetzt aufgenommenen Rohbildern auf. Aus den jeweiligen Bildpaaren wird durch Anwendung eines Stereoalgorithmus' zur Schätzung von Disparitäten korrespondierender Bildmerkmale eine Tiefenkarte erzeugt. Als ein Baustein dafür, die Stereokamera sicher auszugestalten, wird die Funktionsfähigkeit der Bildsensoren überprüft. Vorzugsweise ist die Stereokamera durch weitere Maßnahmen auch sicher im Sinne der einleitend genannten oder vergleichbarer heutiger und zukünftiger Normen, d.h. alle funktionswesentlichen Komponenten sind gemäß einem spezifizierten Sicherheitsniveau ausfallsicher beziehungsweise deren Fehlfunktion wird erkannt.

Die Erfindung geht nun von dem Grundgedanken aus, die Bildsensoren anhand eines gegenseitigen Vergleichs der aufgenommenen Bilder zu überprüfen. Dabei ist die Erwartung, dass gerade solche Bildausschnitte übereinzustimmen haben, die von dem Stereoalgorithmus als zueinander korrespondierend erkannt worden sind. Die beiden Bildsensoren betrachten nämlich in solchen Bildausschnitten praktisch identische Szenenausschnitte. Die Korrelationen des Stereoalgorithmus' und insbesondere die Disparität werden ein weiteres Mal genutzt, um zusätzlich zu der Entfernungsbestimmung auch geeignete Bildfenster oder Pixelbereiche mit als übereinstimmend erwarteten Bildausschnitten für den Vergleich beim Funktionstest zu gewinnen. Durch den Vergleich werden Unterschiede zwischen beiden Bildsensoren an Stellen aufgedeckt, wo sie eigentlich identische Bildinformationen liefern sollten. Dabei werden alle relevanten Fehler aufgedeckt, nämlich einzelne Stuck-At-Pixel, verschobene oder vertauschte Bildbereiche durch Adressfehler und erst recht ein Totalausfall eines Bildsensors.

Die Erfindung hat den Vorteil, dass die sichere Funktion der Bildsensoren gewährleistet werden kann, auch wenn jeweils nur ein Bildsensor pro Stereokanal vorgesehen ist und somit eine einkanalige Architektur vorliegt. Dabei wird ein hoher Diagnosedeckungsgrad erzielt. Die Funktionsüberprüfung kann als Teil der Tiefenkartenberechnung sehr schnell und ohne signifikante Verlängerung implementiert werden. Der zu prüfende Bildsensorbereich ist anpassbar, so dass beispielsweise der gesamte Bildsensor, aber auch nur ein Teil davon berücksichtigt wird, der für die sichere Funktion in der jeweiligen Anwendung notwendig ist.

Die Prüfung zielt primär auf die Bildsensoren selbst, also den Bildaufnahmechip und dessen integrierte oder angeschlossene Schaltkreise für Ansteuerung und Auslesen. Sie ist aber nicht nur auf Pixelfehler sensitiv, sondern kann auch als Verschmutzungsmessung dienen. Da Bildinformationen verglichen werden, führen auch Beeinträchtigungen in dem optischen Empfangspfad für die Rohbilderzeugung mit seinen optischen Elementen zu Veränderungen, die erkannt werden, beispielsweise Verunreinigungen oder Defekte von Mikrolinsen auf dem Bildsensor, eines Bandpassfilters für die Beschränkung des Empfangs auf das eigene Sendelicht, des Objektivs oder der Frontscheibe eines Kameragehäuses.

Das erste Bildfenster und das zweite Bildfenster weisen bevorzugt zueinander einen Versatz auf, welcher der von der Stereoskopie beim Erzeugen der Tiefenkarte bestimmten Disparität für mindestens ein Pixel der Bildfenster entspricht. Da für die Funktionsüberprüfung Pixelbereiche verglichen werden sollen, ist die rohe Disparität in Pixeln gemeint, die nicht auf reale Einheiten der Szenerie umgerechnet ist. Die Disparität gibt an, wie weit korrespondierende Bildmerkmale auseinanderliegen, und ist daher ein besonders geeigneter Weg, Bildfenster aufzufinden, die einander bei ordnungsgemäß arbeitenden Bildsensoren entsprechen sollen. Die Bildfenster sind vorzugsweise um das Pixel oder das Bildmerkmal zentriert, aus dem die Disparität berechnet wurde. Das fußt auf der Annahme, dass Strukturen ähnlicher Entfernung in der Szenerie regelmäßig größer sind als ein Pixel. Getestet werden letztlich die Nachbarpixel innerhalb der Bildfenster. Denn bei dem Pixel oder der Bildstruktur, aus welcher die Disparität berechnet wurde, ist schon durch die Auswahl klar, dass sie einander ähneln, ansonsten wäre gar keine Korrespondenz gefunden worden, welche eine Disparitätsschätzung erlaubt. Umgekehrt können defekte Pixel nicht zu einer Korrespondenz führen, außer in dem sehr unwahrscheinlichen Fall von gerade einer Scheinkorrespondenz entsprechenden Defekten. Es ist nicht erforderlich, dass die ganzen Bildfenster verglichen werden, sondern es können dafür Pixel oder Strukturen innerhalb der Bildfenster ausgewählt werden.

Die Prüfeinheit ist bevorzugt dafür ausgebildet, die Funktionsfähigkeit des Bildsensors in Echtzeit zu prüfen. Das Verfahren ist schnell genug dafür, und es nutzt jeweils lokale Informationen des Stereoalgorithmus'. Daher kann der Funktionstest besonders bevorzugt schon während der Erzeugung der Tiefenkarte durch die Stereoskopieeinheit erfolgen, die Prüfung ist quasi in den Stereoalgorithmus eingebunden oder daran angeschlossen. Dabei ist sowohl ein paralleler Kanal für die Funktionsprüfung als auch eine kleine Verzögerung in einer Pipelinestruktur vorstellbar.

Die Prüfeinheit ist bevorzugt dafür ausgebildet, einzelne Pixelwerte miteinander zu vergleichen und die Abweichung einzeln zu bewerten. Der Stereoalgorithmus liefert Kriterien, wo zu einem Pixel im Bildfenster jeweils im anderen Bild ein übereinstimmendes Pixel erwartet ist, insbesondere anhand eines Abstands, welcher der Disparität entspricht. In dieser Ausführungsform erfolgen Vergleich und Bewertung direkt auf Ebene solcher einzelnen Pixel. Eine Abweichung bedeutet einen möglichen Bildsensorfehler. Eine nachfolgende Bewertung kann aber ergeben, dass die Funktionsfähigkeit noch nicht beeinträchtigt ist, etwa weil das Pixel in keinem sicherheitskritischen Bereich liegt, es isoliert ist und die Nachbarschaft keine Unregelmäßigkeiten zeigt oder die Abweichung nur vorübergehend auftritt.

Die Prüfeinheit ist bevorzugt dafür ausgebildet, die Bildinformation über ein Summenmaß über zumindest einige Pixel der Bildfenster zu vergleichen. Das ist eine Bewertung auf Ebene von Bildbereichen statt Einzelpixeln und auf zweierlei Weise denkbar. In einer Ausführungsform werden mehrere Pixelwerte in einem Bild gemeinsam betrachtet, beispielsweise aufaddiert, und dann mit einer entsprechenden Größe des anderen Bildes verglichen. Dieses Vorgehen ist denkbar, aber weniger sensitiv. In einer bevorzugten Ausführungsform werden zunächst noch einzelne Pixel beider Bilder miteinander verglichen, die gemäß Stereoalgorithmus übereinstimmen sollten. Anschließend werden die Unterschiede mehrerer oder aller Pixel der Bildfenster summarisch bewertet. Dabei kann noch eine Gewichtung der zu summierenden Unterschiede erfolgen, beispielsweise mit einer Potenz n, wobei besonders bevorzugt das quadratische Residuum bei n=2 herangezogen werden kann. Es sind aber auch andere summarische Maße denkbar, etwa ein Median oder das Bilden und Vergleichen von Histogrammen.

Das Summenmaß wird bevorzugt über Differenzen von Pixelwerten oder von Differenzen der Pixelwerte benachbarter Pixel der beiden Rohbilder gebildet. Die Differenz der Pixelwerte oder Helligkeitsunterschiede sind wohl das unmittelbarste Maß, um Unterschiede einzelner Pixel zu bewerten. Es ist aber auch denkbar, schon gewisse Nachbarschaftsbeziehungen innerhalb der jeweiligen Bilder zu berücksichtigen, insbesondere in Form eines Gradienten zu den direkten Nachbarpixeln. Dann werden innerhalb eines Bildes Differenzen beispielsweise zwischen dem zu vergleichenden Pixel und seinem linken Nachbarn gebildet, oder ein komplexerer Gradient, und diese Maße dann zwischen den Bildern verglichen. Ein Vorteil ist, dass durch die Gradientenbildung ein globales Helligkeitsoffset zwischen den Bildsensoren herausfällt. Alternativ könnte man ein solches Helligkeitsoffset vorab bestimmen und dann kompensieren.

Die Prüfeinheit ist bevorzugt dafür ausgebildet, aus den ersten und zweiten Bildinformationen jeweils mindestens ein Bildmerkmal zu erzeugen und die Bildinformationen anhand der Bildmerkmale miteinander zu vergleichen. Hier wird der Gedanke, bereits Nachbarschaftsbeziehungen innerhalb der einzelnen Bilder zu berücksichtigen, noch weiter vorangetrieben, indem zunächst Bildmerkmale gesucht werden, insbesondere Kanten. Der Vergleich erfolgt dann nicht auf Ebene von Werten einzelne Pixel oder Pixelbereiche, sondern von Bildmerkmalen. Übrigens können die diversen vorgestellten Kriterien zum Aufdecken von Unterschieden in den Bildfenstern auch in beliebigen Kombinationen gemeinsam verwendet werden.

Die Prüfeinheit ist bevorzugt dafür ausgebildet, Abweichungen zwischen der ersten Bildinformation und der zweiten Bildinformation mit einer Rauschschwelle zu vergleichen. Das ist bei allen genannten Kriterien denkbar. Eine gewisse Schwankung wird noch toleriert und nicht Bildsensor- oder Pixelfehlern zugeschrieben, damit es nicht zu unnötigen Fehlalarmen kommt. Wie schon erläutert, müssen aber auch Abweichungen über die Rauschschwelle hinaus noch keine kritischen Fehler sein, es können weitere Bewertungen folgen.

Die Prüfeinheit ist bevorzugt dafür ausgebildet, durch den Vergleich zwischen der ersten Bildinformation und der zweiten Bildinformation aufgedeckte Abweichungen zu protokollieren und erst bei wiederholtem Auftreten als Fehler zu bewerten. Dies ist ein weiteres Kriterium, um mögliche Fehler zunächst noch zu tolerieren und von tatsächlich kritischen Fehlern zu unterscheiden. Dazu wird eine Art Protokoll über mögliche Fehler geführt. Transiente Fehler über nur einen oder einige Frames sind noch nicht unbedingt Bildsensorfehler. Die Anforderungen der Sicherheitsanwendung bestimmen, ab wann eine Gefahrensituation übersehen werden könnte, und eine solche kritische Häufung von möglichen Fehlern führt dann zur sicherheitsgerichteten Reaktion. Wiederholte Abweichungen unter dieser durch die Sicherheit gegebenen Schwelle können auch schon ein Hinweis auf einen künftigen Ausfall sein, der beispielsweise als Wartungsmeldung weitergegeben wird.

Vorzugsweise ist eine Vorverarbeitungseinheit vorgesehen, die Rohbilddaten für die Stereoskopieeinheit zu entzerren und/oder zu glätten. Die Rohbilder werden hier vor dem Stereoalgorithmus in gewisse Weise normiert, insbesondere eine Verzeichnung korrigiert oder eine Interpolation vorgenommen, um eine robuste Suche nach Korrespondenzen vorzubereiten. Die Prüfeinheit deckt Fehler auch mit derart vorverarbeiteten Bildern auf. Es ist aber auch denkbar, die unbehandelten Rohbilder zwischenzuspeichern und mit deren Pixeln zu testen. Auch derart vorverarbeite Rohbilder werden im Sinne der Ansprüche vereinfachend weiter als Rohbilder bezeichnet.

Die Prüfeinheit ist bevorzugt dafür ausgebildet, ein Pixel, das durch den Vergleich der Bildinformationen als möglicherweise fehlerhaft aufgedeckt ist, mit seiner Nachbarschaft in beiden Rohbildern zu vergleichen und den Fehler dem Bildsensor zuzuordnen, in dem dabei die größeren Unterschiede auftreten. Viele der oben erläuterten Ausführungsformen decken zwar auf, dass ein Fehler vorliegt, lokalisieren ihn aber nicht. Gerade für eine weitere Diagnose oder Reparatur ist aber zumindest ein Hinweis nützlich, welcher der beiden Bildsensoren vermutlich fehlerhaft ist. Dazu wird geprüft, in welchem der beiden Rohbilder das Fehlerpixel stärker aus seiner Nachbarschaft heraussticht. Das ist ein starker Hinweis darauf, dass hier der Fehler vorliegt, da reale Szenenmerkmale keine isolierten Sprünge aufweisen. Es ist vernachlässigbar wahrscheinlich, dass umgekehrt das herausstechende Pixel tatsächlich die Szenerie wiedergibt und gleichzeitig der andere Bildsensor an dieser Stelle einen Pixelfehler hat, der es entgegen der unterstellten tatsächlichen Szenerie ähnlich zu seiner Umgebung macht. Ohnehin wäre an dieser Stelle eine Fehlzuordnung nicht sicherheitskritisch, da es nur um eine Diagnose der Fehlerursache und nicht mehr um den bereits aufgedeckten Fehler an sich geht.

Die Prüfeinheit ist bevorzugt dafür ausgebildet, anhand einer Vielzahl von ersten Bildfenstern und zweiter Bildfenster zu prüfen, die gemeinsam zumindest den sicherheitsrelevanten Bereich der Bildsensoren bilden. Mit bestimmten ersten und zweiten Bildfenstern wird nur ein Teilbereich der Bildsensoren überprüft. Daher wird hier die Überprüfung mit anderen Bildfenstern wiederholt, um den ganzen Bildsensor oder zumindest einen sicherheitsrelevanten Teil davon abzudecken. Durch Beschränkung auf den sicherheitsrelevanten Teil wird Aufwand vermieden. Es kann einerseits Randbereiche der einzelnen Bilder geben, die nur einer der Bildsensoren überhaupt erfasst. Dort muss und kann auch nicht sinnvoll getestet werden, die Stereoskopieeinheit nutzt nur den gemeinsamen Sichtbereich. Außerdem kann eine Beschränkung auf einen sicherheitsrelevanten Teilbereich vorgenommen werden, weil ein Fehler außerhalb dann die Sicherheit nicht berührt.

Eine einfache Umsetzungsmöglichkeit zum Prüfen der notwendigen Bildsensorbereiche ist, nacheinander um jedes Pixel oder jedes Pixel zumindest des sicherheitsrelevanten Bereichs Bildfenster zu legen und zu prüfen, insbesondere synchron mit dem Stereoalgorithmus, der ebenfalls nacheinander Korrelationsfenster um die Pixel der gegebenenfalls vorverarbeiteten Rohbilder legt. Da die Bildfenster eine gewisse Ausdehnung haben, werden etwaige Pixelfehler womöglich mehrfach aufgedeckt. Das ist aber nicht unbedingt nachteilig, weil es die Sicherheit erhöht. Alternativ kann diese Redundanz vermieden werden, indem zu testende Bildfenster nur um Pixel mit einem gewissen gegenseitigen Versatz gelegt werden, der dann vorzugsweise kleiner ist als die Ausdehnung der Bildfenster, um keine Lücken der Überdeckung zu lassen.

Der sicherheitsrelevante Bereich ist bevorzugt statisch oder dynamisch auf nur einen Teil der Bildsensoren festgelegt. Wie schon erläutert, ist prinzipbedingt für eine sichere Stereoskopie nur ein überlappender Sichtbereich der beiden Bildsensoren relevant. Auch innerhalb dieses 3D-Fensters können aber sicherheitsrelevante Teilbereiche selektiert sein, Pixel zu ausgeblendeten oder nicht sicherheitsrelevanten Bereichen müssen nicht getestet werden. Die Definition eines zusammenhängenden oder mehrteiligen sicherheitsrelevanten Bereichs kann statisch sein oder sich dynamisch verändern, beispielsweise mit einer Gefahrenquelle und/oder einem bereits erfassten Objekt mitwandern.

Die Prüfeinheit ist bevorzugt dafür ausgebildet, mit dem Erzeugen jeweils einer Tiefenkarte der Stereoskopieeinheit alternierend nur einen Teil der Vielzahl zu prüfen. Die zu testenden Bildfenster wechseln, wenn zumindest der sicherheitsrelevante Bereich abgedeckt werden soll. Das Prüfen der Bildsensoren muss aber nicht zwingend mit gleicher Frequenz erfolgen wie die Bildaufnahme selbst. Es ist auch denkbar, den jeweils zu prüfenden Bildbereich zwischen den Frames zu wechseln, so dass die Überprüfung erst nach mehreren Frames vollständig wird. Dazwischen sind auch Frames denkbar, in denen gar nicht geprüft wird.

Die Stereokamera weist bevorzugt einen Sicherheitsausgang auf, wobei die Prüfeinheit dafür ausgebildet ist, über den Sicherheitsausgang ein Absicherungssignal auszugeben, wenn die Funktionsfähigkeit der beiden Bildsensoren nicht gegeben ist. Der Sicherheitsausgang ist normgerecht ausgebildet, also beispielsweise zweikanalig und/oder regelmäßig durch Testsignale überprüft. Darüber wird bestimmungsgemäß ein Absicherungssignal ausgegeben, wenn die Stereokamera eine Gefahr entdeckt. Eine solche sicherheitsgerichtete Reaktion sollte aber auch erfolgen, wenn Fehler der Bildsensoren erkannt sind und damit die Funktionsfähigkeit nicht mehr garantiert ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1     eine schematische dreidimensionale Darstellung einer Stereokamera und

Fig. 2     eine schematische Ansicht beispielhafter Rohbilder zur Erläuterung geeigneter Bildfenster für eine Funktionsüberprüfung der Bildsensoren der Stereokamera.

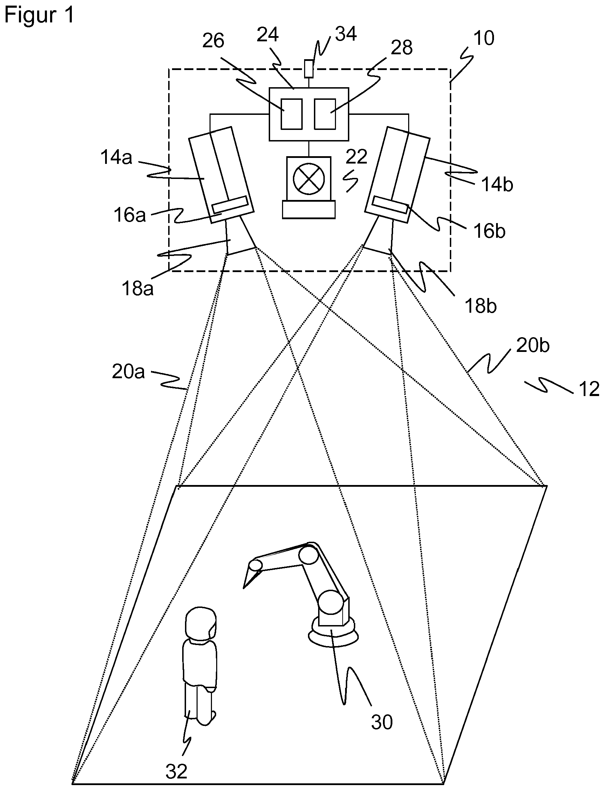

Figur 1 zeigt in einer schematischen dreidimensionalen Darstellung den allgemeinen Aufbau einer Stereokamera 10 zur Aufnahme einer Tiefenkarte. Die dargestellte Stereokamera 10 ist für eine Aufnahme von oben montiert, was oft vorteilhaft ist und auch an manchen Stellen in dieser Beschreibung die Sprache der geometrischen Beziehungen prägt. Dennoch kann die Stereokamera 10 ebenso seitlich, unten oder in beliebiger sonstiger Position und Orientierung angebracht sein. Dabei sind feste Montage und mobile Anwendungen möglich, und die betrachteten Szenen können statisch oder dynamisch sein.

Zur Erfassung eines Raumbereichs 12 sind zwei Kameramodule 14a-b der Stereokamera 10 in einem bekannten festen Abstand zueinander montiert und nehmen jeweils Bilder des Raumbereichs 12 auf. In jeder Kamera ist ein Bildsensor 16a-b vorgesehen, üblicherweise ein matrixförmiger Aufnahmechip, der ein rechteckiges Pixelbild aufnimmt, beispielsweise ein CCD- oder ein CMOS-Sensor. Es sind Farb- wie Monochromsensoren denkbar, insbesondere auch außerhalb des sichtbaren Spektrums wie Infrarot. Die weitere Erläuterung erfolgt meist anhand der Vorstellung von Grauwertbildern mit einfachen Helligkeitsstufen, ist aber auf Farbbilder ohne Weiteres übertragbar. Die Bildsensoren 16a-b können als "global shutter" oder "rolling shutter" ausgebildet sein. Den Bildsensoren 16a-b ist je ein Objektiv 18a-b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20-b bilden. Die Darstellung als jeweils eigene Kameras 14a-b soll lediglich das Prinzip einer Stereokamera 10 illustrieren. Praktisch können die Bildsensoren 16a-b samt Objektiv 18a-b ebenso in einem gemeinsamen Gehäuse untergebracht sein.

Zwischen den beiden Bildsensoren 16a-b ist eine Beleuchtungseinheit 22 vorgesehen, um ein strukturiertes Muster in den Raumbereich 12 zu projizieren. Die Stereokamera 10 ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber häufig zu zusätzlichen Bildfehlern führt.

Mit den beiden Bildsensoren 16a-b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise einem externen Standardcomputer, einem oder mehreren internen digitalen Bausteinen wie Mikroprozessoren, ASICs (Application Specific Integrated Circuit), FPGAs (Field Programmable Gate Array), GPUs (Graphics Processing Unit) oder Mischformen davon. Da das Erzeugen der Tiefenkarte und deren Auswertung sehr rechenintensiv ist, wird vorzugsweise eine zumindest teilweise parallele Architektur gebildet.

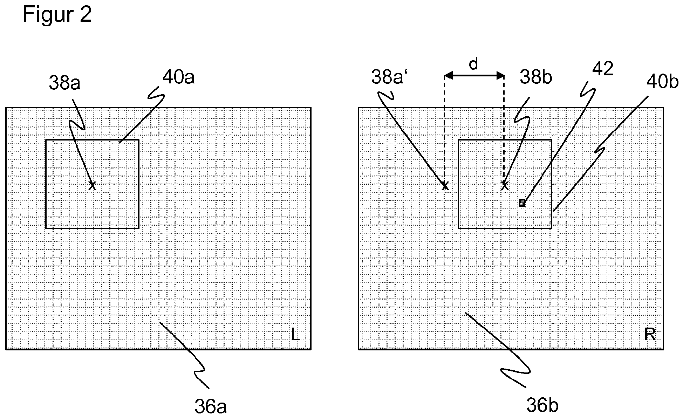

Die Steuer- und Auswertungseinheit 24 erzeugt mit Hilfe der Beleuchtungseinheit 22 das strukturierte Beleuchtungsmuster und empfängt Bilddaten der Bildsensoren 16a-b. Aus diesen Bilddaten berechnet eine Stereoskopieeinheit 26 der Steuer- und Auswertungseinheit 24 mit Hilfe einer stereoskopischen Disparitätsschätzung die dreidimensionalen Bilddaten beziehungsweise die Tiefenkarte des Raumbereichs 12. Eine Prüfeinheit 28 der Steuer- und Auswertungseinheit 24 ist dafür ausgebildet, die Funktionsfähigkeit der Bildsensoren 16a-b zu überprüfen. Das wird im Anschluss unter Bezugnahme auf die Figur 2 genauer erläutert. Die Stereoskopieeinheit 26 und die Prüfeinheit 28 stellen nur Funktionsblöcke dar, es ist nicht beschränkt, wie und wo die tatsächliche Hardwareimplementierung erfolgt. Für diese und sonstige Auswertungen kann der gesamte erfassbare Raumbereich 12 über eine Konfiguration eingeschränkt werden, beispielsweise um störende, gänzlich statische oder sicherheitstechnisch nicht relevante Bereiche auszublenden.

Eine wichtige sicherheitstechnische Anwendung der Stereokamera 10 ist die Überwachung einer Gefahrenstelle 30, die in der Figur 1 durch einen Roboter symbolisiert ist. Dazu können in dem Raumbereich 12 Schutzfelder konfiguriert sein, welche die Gefahrenstelle 30 wie eine virtuelle Wand absichern. Allgemeiner formuliert ist die Aufgabe der Steuer- und Auswertungseinheit 24, rechtzeitig zu erkennen, wenn ein Objekt 32, insbesondere eine Person oder ein Körperteil, der Gefahrenstelle 30 auf unzulässige Weise zu nahe kommt. Bei derartigen kritischen Ereignissen wird ein sicherheitsgerichtetes Absicherungssignal ausgelöst und über einen sicheren Ausgang 34 (OSSD, Output Signal Switching Device) ausgegeben, um beispielsweise den Roboter anzuhalten. Alternativ werden über den sicheren Ausgang 34 aus der Tiefenkarte gewonnene Informationen über Gefahrenstellen 30 und Objekte 32 ausgegeben, die dann extern im Hinblick auf mögliche Gefahren bewertet werden. Die Stereokamera 10 ist für solche sicherheitstechnischen Anwendungen vorzugsweise sicher im einleitend erläuterten Sinne ausgebildet, wobei ein Aspekt davon die Funktionsüberprüfung der Bildsensoren 16a-b durch die Prüfeinheit 28 ist.

Figur 2 zeigt rein schematisch ein Paar eines linken Bildes 36a und eines rechten Bildes 36b der beiden Bildsensoren 16a-b. Solche vorzugsweise simultan aus der versetzten Perspektive der Kameramodule 16a-b aufgenommenen Bildpaare verwendet die Stereoskopieeinheit 26 zur Erzeugung einer Tiefenkarte. Die Stereoskopieeinheit 26 verwendet einen an sich bekannten Stereokorrelationsalgorithmus. Dabei fungiert eines der Bilder, hier ohne Beschränkung der Allgemeinheit das linke Bild 36a, als Stützbild. Darin wird um ein jeweiliges Ausgangspixel 38a ein Fenster 40a gelegt, üblicherweise ein Rechteck oder sogar ein Quadrat. Es ist denkbar, nur einen Teil der Pixel in dem Fenster 40a zu beachten, etwa nur jedes i-te Pixel. In dem anderen, hier rechten Bild 36b wird nach einer Korrespondenz gesucht. Dazu wird ein entsprechendes Fenster 40b im rechten Bild 36a so lange gegen die Ausgangsposition bei einem Ausgangspixel 38a' des rechten Bildes 36b an der dem Ausgangspixels 38a des linken Bildes 36a entsprechenden Position verschoben, bis die Korrelationskosten minimal werden. Dieses Fenster 40b bester Korrelation um ein verschobenes Pixel 38b ist in Figur 2 gezeigt. Die erforderliche Translationsstrecke, nämlich der Abstand zwischen Ausgangspixel 38a' und verschobenem Pixel 38b, ist die gesuchte Disparität d, die anhand der Geometrie der Stereokamera 10 in eine Entfernung umgerechnet werden kann. Die Korrelation selbst ist recht aufwändig, und dafür sind verschiedene Algorithmen wie Census-Algorithmus, BRIEF (Binary Robust Independent Elementary Features), SIFT (Scale-invariant feature transform) oder FAST (Features from accelerated segment test) keypoint detector bekannt.

In Figur 2 sind die Bildsensoren 16a-b mit ihren Zeilen parallel zum Basisabstand ausgerichtet, so dass die Bildzeilen gerade die Epipolarlinien bilden, längs derer für die Korrelation verschoben wird. Diese Ausrichtung ist gerade für Echtzeitauswertungen besonders vorteilhaft, aber nicht zwingend.

Die Prüfeinheit 28 nutzt den Prozess der Stereokorrelation aus, um Bildsensorfehler aufzudecken. Insbesondere wird das Überprüfen der Bildsensoren 16a-b direkt in eine Echtzeit-Stereokorrelation eingebunden beziehungsweise daran angehängt. Nach der Korrelation und insbesondere bei der ermittelten Disparität d ist zu erwarten, dass der Inhalt der beiden Fenster 40a-b bis auf Rauscheffekte nahezu identisch ist, da ja die entsprechenden Pixelbereiche der Bildsensoren 16a-b den gleichen Szenenausschnitt wahrnehmen. Diese Erwartungshaltung zwischen linkem und rechtem Bildsensorausschnitt, der durch die Fenster 40a-b gegeben ist, wird nun auf Abweichungen überprüft und angenommen, dass solche Abweichungen von Bildsensorfehlern stammen. Bevor die Prüfeinheit 28 dann tatsächlich eine Fehlfunktion erkennt und darauf reagiert, sind aber noch nachgeordnete Bewertungen anhand von Kriterien wie Ausmaß, Dauer und Lage bezüglich sicherheitstechnisch relevanter Gefahrenstellen 30 und Objekte 32 möglich.

Für die Überprüfung auf Abweichungen, vorzugsweise in Echtzeit, sind verschiedene mathematische Operationen und Maße denkbar. Ein mögliches Maß ist ein quadratisches Residuum zwischen den Fenstern 40a-b:

$$\varepsilon_1 = \sum_{i,j}\left(px_{i,j}^r - px_{i,j}^l\right)^2.$$

Dabei sind $px_{i,j}^l$ und $px_{i,j}^r$ die Pixelwerte, also die Amplituden oder Helligkeiten, an der Position i,j in den Fenstern 40a-b des linken und rechten Bildes 36a-b. Anstelle eines quadratischen Residuums können die zu summierenden Pixelunterschiede auch mit einer anderen Potenz vorzugsweise gerader Ordnung bewertet werden. Bei funktionsfähigen Bildsensoren 16a-b sollte das Residuum $\varepsilon_1$ sehr klein sein, da nur Bildsensorrauschen gegeneinander aufgerechnet wird. Dabei sollte vorzugsweise die Toleranzschwelle für Rauschen mit der Größe der Fenster 40a-b anwachsen. Weicht jedoch ein Pixel 42 beispielsweise durch einen Stuck-at-Fehler ab, so erhöht das den Wert des Residuums $\varepsilon_1$, und die Abweichung wird mit jedem Fehlerpixel größer. Das gilt besonders für vertauschte Zeilen oder Spalten oder gar den Totalausfall eines Bildsensors 16a-b.

Ein anderes Maß prüft nicht die Unterschiede von Pixelwerten, sondern ob sich die Gradienten innerhalb der beiden Fenster 40a-b unterscheiden. Eine denkbare Formel wäre

$$\varepsilon_2 = \sum_{i,j}\left(\{px_{i,j}^r - px_{i,j+1}^r\} - \{px_{i,j}^l - px_{i,j+1}^l\}\right)^2,$$

wobei also jeweils der Unterschied benachbarter Pixel innerhalb eines der Fenster 40a-b mit einem entsprechenden Gradienten im anderen Fenster 40b-a verglichen wird. Selbstverständlich sind ebenso andere Gradientenmaße insbesondere zu mehr und/oder anderen Nachbarn möglich, und auch hier kann mit anderen Potenzen als dem Quadrat gewichtet werden. Ein Vorteil dieser Bewertung ist, dass sie unabhängig von einem globalen Helligkeitsoffset der Bildsensoren 16a-b ist. Es ist nämlich häufig so, dass die beiden in der Stereokamera 10 verbauten Bildsensoren 16a-b von Anfang an insgesamt unterschiedlich hell aufnehmen. Das würde bei dem zuerst angeführten Residuum $\varepsilon_1$ zu sehr großen Werten führen, auch wenn die Bildsensoren 16a-b einwandfrei funktionieren. Das auf Gradienten basierende Residuum $\varepsilon_2$ eliminiert ein globales Helligkeitsoffset durch die Differenz von Nachbarn. Alternativ könnte man in dem zuerst angeführten Residuum $\varepsilon_1$ ein zuvor bestimmtes globales Helligkeitsoffset kompensieren.

Die beiden Residuen $\varepsilon_1$, $\varepsilon_2$ samt Varianten sind nur zwei von vielen Beispielen. Es wäre als weitere Alternative denkbar, direkt eine jeweilige Summe der Pixelwerte in dem Fenster 40a und dem Fenster 40b zu bilden und diese Summen zu vergleichen. Das ist sehr einfach und schnell, dafür aber weniger sensitiv, und die Ortsinformation über von einem Ausfall betroffene Pixel bliebe sehr grob. Eng verwandt ist das Bilden eines Mittelwerts über die Fenster 40a-b. Auch andere statistische Maße wie der Median über die Pixel der Fenster 40a-b sind vorstellbar, oder Histogrammverfahren, bei dem Helligkeitshistogramme der Pixelwerte gebildet und dann verglichen werden. Der Vergleich muss auch nicht auf Pixelwerten basieren. So ist denkbar, Bildmerkmale in den Fenstern 40a-b zu identifizieren, beispielsweise Kantenpositionen, und den Vergleich dann auf Ebene von Bildmerkmalen durchzuführen, also beispielsweise Kantenpositionen zu vergleichen.

In allen bisher erläuterten Vergleichen werden summarische Maße innerhalb der Fenster 40a-b und/oder summarische Maße über die Unterschiede gebildet. Es sind aber auch Verfahren ohne Summenbildung denkbar. Dabei wäre als ein Beispiel der direkte paarweise Pixelvergleich zu nennen, bei dem jeweils ein Pixel im einen Fenster 40a-b direkt mit seinem Pendant im anderen Fenster 40b-a verglichen wird, also insbesondere dem jeweils um die Disparität d verschobenen Pixel. Zu große Unterschiede werden dann als möglicher Fehler angesehen, wobei dies wie mehrfach erwähnt noch nicht heißen muss, dass die Prüfeinheit 28 einen der Bildsensoren 16a-b insgesamt als defekt bewertet. Eine Kombination oder das Hintereinanderschalten mehrerer oder aller erläuterten Verfahren zum Aufdecken von möglicherweise kritischen Abweichungen zwischen den Bildern 38a-b ist auch möglich. Es sei noch angemerkt, dass das Vorgehen von der Annahme ausgeht, dass nicht zufällig zwei einander entsprechende Pixel auf demselben Pixelwert eingebrannt sind. Solche Stuck-at-Fehler könnten natürlich nicht von tatsächlich aufgenommenen Pixelwerten unterschieden werden. Die Wahrscheinlichkeit eines solchen doppelten Fehlers auch noch auf denselben Pixelwert ist vernachlässigbar, und ein übliches Normkriterium ist die Aufdeckung eines einzelnen Fehlers.

Die Stereoskopieeinheit 26 arbeitet in bevorzugten Ausführungsformen nicht direkt mit den Rohbildern der Bildsensoren 16a-b, sondern es findet zuvor eine Kalibration der beiden Kameramodule und eine anschließende Transformation beider Bildinhalte in die sogenannte Stereonormalkonfiguration statt. Ein möglicher Schritt dabei ist eine Interpolation, insbesondere eine bilineare Interpolation oder eine bikubische Interpolation.

Andere mögliche Schritte sind eine Entzeichnung zum Ausgleich von Objektivartefakten und eine Rektifizierung in die Epipolargeometrie. Die Prüfeinheit 28 kann auch mit derart vorverarbeiteten Bildern arbeiten und deckt darin die Pixelfehler genauso auf. Alternativ werden die Rohbilder zwischengespeichert, und die Prüfeinheit 28 greift auf deren Pixelwerte zu, vorzugsweise aber basierend auf Informationen des Stereoalgorithmus' und insbesondere Disparitäten, die anhand der vorverarbeiteten Bilder aufgefunden sind. Die Prüfeinheit 28 "sticht" dann auf die "darunter" noch gepufferten Rohbilddaten "durch" und verwendet dafür die bekannten und einander entsprechenden relativen Pixeladressen in dem vorverarbeiteten Bild beziehungsweise in dem Rohbild.

Beispielsweise bei einer bilinearen Interpolation wird ein neues Zielpixel aus vier Ausgangspixeln erzeugt, die ebenso wie das Ursprungspixel der betreffenden Pixelposition mit verschiedenem Gewicht einfließen. Ein Pixelfehler, beispielsweise ein Stuck-at-Fehler, schlägt trotz dieser Gewichte ausreichend durch, um noch durch Vergleich der Fenster 40a-b aufgedeckt zu werden. Sofern zufällig der Stuck-at-Wert so nahe an den Nachbarwerten liegt, dass er durch die Interpolation doch noch verwischt wird beziehungsweise noch in der Rauschtoleranz liegt, so ist das sicherheitstechnisch unproblematisch. Der Fehler wird genau dann aufgedeckt, wenn sich der Stuck-at-Wert von der Umgebungshelligkeit absetzt, und erst dann besteht Handlungsbedarf.

An sich ist für das Stereoprinzip unerheblich, ob der linke oder der rechte Bildsensor 16a-b einen aufgedeckten Fehler hat, da zur Berechnung der Tiefenwerte die Information beider Bildsensoren 16a-b benötigt wird. Ist man dennoch daran interessiert, welcher Bildsensor 16a-b betroffen ist, beispielsweise für Diagnose- und Wartungszwecke, so ist optional denkbar, die als fehlerhaft identifizierten Pixel mit ihrer direkten Nachbarschaft innerhalb ihres linken oder rechten Bildes 36a-b zu vergleichen. Dazu können ähnliche Differenzmethoden zum Einsatz kommen wie für das erst-genannte Residuum $\varepsilon_1$. Größere Unterschiede beziehungsweise Residuen sollten nur bei dem Bildsensor 16a-b mit dem Fehler auftreten, da eine Pixelnachbarschaft fast immer große Ähnlichkeiten desselben aufgenommenen Szenenmerkmals aufweist und sich deshalb Helligkeitswerte in der direkten Nachbarschaft nicht sprunghaft ändern. Eine Zuweisung des Fehlers an den falschen Bildsensor 16a-b wäre auch nicht sicherheitskritisch.

Das Aufdecken von fehlerhaften Pixeln der Bildsensoren 16a-b wurde bisher nur anhand eines Ausgangspixels 38a mit einem Paar Fenstern 40a-b erläutert. Das Ausgangspixel 38a und damit die Fenster 40a-b verschieben sich in den Wiederholungen des Stereoalgorithmus' für die weiteren Pixel der Tiefenkarte. Dabei treten natürlich wechselnde Disparitäten je nach Entfernung der aufgenommenen Szenenmerkmale auf. Die Prüfeinheit 28 kann die beschriebene Fehleraufdeckung für jedes neue Pixel der Tiefenkarte wiederholen. Da defekte Pixel auf dem Bildsensor 16a-b stationär sind, wird womöglich bei der erneuten Prüfung der Bildsensoren 16a-b mit einem benachbarten Tiefenwert bei ähnlichen Fenstern 40a-b derselbe Pixelfehler noch einmal gefunden, weil das defekte Pixel noch einmal Teil des Vergleichsmaßes wird. Diese Redundanz ist aber gar nicht nachteilig, sondern macht im Gegenteil das Verfahren besonders robust. Das gilt insbesondere für Zeilen und Spaltenvertauschungen. Man kann die Redundanz auch vermeiden oder verringern, indem die Prüfeinheit 28 nicht für jedes, sondern nur jedes n-te Pixel Fenster 40a-b bildet und prüft. Damit wird der Prüfaufwand verringert. Eine andere Möglichkeit für reduzierten Rechenaufwand ist, pro Bildframe jeweils einen anderen Teil der Pixel oder andere Bildsensorareale zu prüfen, bis der gesamte Bildsensor 16a-b innerhalb eines wohldefinierten Zeitintervalls insgesamt überprüft ist.

Unabhängig davon, ob die unterschiedlichen Pixel der Bildsensoren 16a-b sukzessive über mehrere Frames oder schon innerhalb eines Frames geprüft werden, ist es keineswegs immer notwendig, den gesamten Bildsensor 16a-b zu prüfen. Vielmehr ist die Sicherheitsfunktion häufig nur in bestimmten Teilbereichen zu gewährleisten, und dann genügt es, diesen sicherheitsrelevanten Teilbereich zu prüfen. Das kann der sogenannte "collaborative workspace" sein, in dem sich Mensch und Maschine bestimmungsgemäß begegnen. Der sicherheitsrelevante Teilbereich kann statisch konfiguriert sein, wie insbesondere als Schutzfeld, oder es werden dynamisch Umgebungen von Gefahrenstellen 30 und Objekten 32 beobachtet und dementsprechend auch nur die zugehörigen Pixelbereiche geprüft. Es ist denkbar, solche dynamischen sicherheitsrelevanten Teilbereiche von Frame zu Frame zu verfolgen (Tracking) und damit situativ anzupassen.

Es ist auch denkbar, verdächtige Pixel, Zeilen oder Spalten zunächst nur in eine Art Logbuch einzutragen. Häufen sich dann bestimmte Einträge, so erhärtet sich der Verdacht des Defekts. Dann kann beispielsweise eine Schwelle für wiederkehrende Einträge vergeben werden, ab der eine sicherheitsgerichtete Aktion durchgeführt werden soll. Es ist zudem denkbar, solche Häufungen auch unterhalb der sicherheitskritischen Schwelle für Vorausfall-Meldungen auszunutzen (predictive maintainance).

Bei der Stereoskopie gibt es eine sogenannte Okklusionsproblematik, bei der nur eine Kamera ein Szenenmerkmal erfasst. In Okklusionsbereichen gibt es aufgrund der Parallaxe der Bildsensoren keine Korrespondenzen, und damit fehlt es an der Erwartungshaltung für die Prüfeinheit 28. Allerdings können in Okklusionsbereichen auch keine Tiefenwerte erzeugt werden, die Tiefenkarte hat hier Löcher. Mit solchen Löchern muss die Sicherheitsbewertung der Stereokamera 10 umgehen können. Ob auch ein Pixelfehler zufällig mit einem derartigen Loch zusammenfällt, ändert an dieser Sicherheitsbewertung nichts. Der Pixelfehler muss erst dann aufgedeckt werden, wenn er nicht mehr in einen Okklusionsbereich fällt und möglicherweise einen falschen, sicherheitskritischen Tiefenwert erzeugt.

**Patentansprüche**

1.  Sichere Stereokamera (10), die mindestens einen ersten Bildsensor (16a) zur Aufnahme eines ersten Rohbildes (36a) und einen zweiten Bildsensor (16b) zur Aufnahme eines zweiten Rohbildes (36b) eines Überwachungsbereichs (12) aus gegeneinander versetzter Perspektive, eine Stereoskopieeinheit (26) zum Erzeugen einer Tiefenkarte aus den beiden Rohbildern (36a-b) sowie eine Prüfeinheit (28) zum Überprüfen der Funktionsfähigkeit der Bildsensoren (16a-b) aufweist,
    **dadurch gekennzeichnet,**
    **dass** die Prüfeinheit (28) dafür ausgebildet ist, zum Erkennen von Fehlern der Bildsensoren (16a-b) erste Bildinformationen aus einem ersten Bildfenster (40a) des ersten Rohbildes (36a) mit zweiten Bildinformationen aus einem zweiten Bildfenster (40b) des zweiten Rohbildes (36b) zu vergleichen und die Bildfenster (40a-b) anhand von Informationen der Stereoskopieeinheit (26) beim Erzeugen der Tiefenkarte auszuwählen.

2.  Stereokamera (10) nach Anspruch 1,
    wobei das erste Bildfenster (40a) und das zweite Bildfenster (40b) zueinander einen Versatz aufweisen, welcher der von der Stereoskopieeinheit (26) beim Erzeugen der Tiefenkarte bestimmten Disparität für mindestens ein Pixel der Bildfenster (40a-b) entspricht.

3.  Stereokamera (10) nach Anspruch 1 oder 2,
    wobei die Prüfeinheit (28) dafür ausgebildet ist, die Funktionsfähigkeit des Bildsensors (16a-b) in Echtzeit zu prüfen, insbesondere während der Erzeugung der Tiefenkarte durch die Stereoskopieeinheit (26).

4.  Stereokamera (10) nach einem der vorhergehenden Ansprüche,
    wobei die Prüfeinheit (28) dafür ausgebildet ist, einzelne Pixelwerte miteinander zu vergleichen und die Abweichung einzeln zu bewerten.

5.  Stereokamera (10) nach einem der vorhergehenden Ansprüche,
    wobei die Prüfeinheit (28) dafür ausgebildet ist, die Bildinformation über ein Summenmaß über zumindest einige der Pixel der Bildfenster (40a-b) zu vergleichen.

6.  Stereokamera (10) nach Anspruch 5,
    wobei das Summenmaß über Differenzen von Pixelwerten oder von Differenzen der Pixelwerte benachbarter Pixel der beiden Rohbilder (36a-b) gebildet wird.

7.  Stereokamera (10) nach einem der vorhergehenden Ansprüche,
    wobei die Prüfeinheit (28) dafür ausgebildet ist, aus den ersten und zweiten Bildinformationen jeweils mindestens ein Bildmerkmal zu erzeugen und die Bildinformationen anhand der Bildmerkmale miteinander zu vergleichen.

8.  Stereokamera (10) nach einem der vorhergehenden Ansprüche,

wobei die Prüfeinheit (28) dafür ausgebildet ist, Abweichungen zwischen der ersten Bildinformation und der zweiten Bildinformation mit einer Rauschschwelle zu vergleichen.

9. Stereokamera (10) nach einem der vorhergehenden Ansprüche, wobei die Prüfeinheit (28) dafür ausgebildet ist, durch den Vergleich zwischen der ersten Bildinformation und der zweiten Bildinformation aufgedeckte Abweichungen zu protokollieren und erst bei wiederholtem Auftreten als Fehler zu bewerten.

10. Stereokamera (10) nach einem der vorhergehenden Ansprüche, wobei eine Vorverarbeitungseinheit (24) vorgesehen ist, die Rohbilddaten für die Stereoskopieeinheit (26) zu entzerren und/oder zu glätten.

11. Stereokamera (10) nach einem der vorhergehenden Ansprüche, wobei die Prüfeinheit (28) dafür ausgebildet ist, ein Pixel (42), das durch den Vergleich der Bildinformationen als möglicherweise fehlerhaft aufgedeckt ist, mit seiner Nachbarschaft in beiden Rohbildern (36a-b) zu vergleichen und den Fehler dem Bildsensor (16a-b) zuzuordnen, in dem dabei die größeren Unterschiede auftreten.

12. Stereokamera (10) nach einem der vorhergehenden Ansprüche, wobei die Prüfeinheit (28) dafür ausgebildet ist, anhand einer Vielzahl von ersten Bildfenstern (40a) und zweiter Bildfenster (40b) zu prüfen, die gemeinsam zumindest den sicherheitsrelevanten Bereich der Bildsensoren (16a-b) bilden, wobei insbesondere der sicherheitsrelevante Bereich statisch oder dynamisch auf nur einen Teil der Bildsensoren (16a-b) festgelegt ist.

13. Stereokamera (10) nach Anspruch 12, wobei die Prüfeinheit (28) dafür ausgebildet ist, mit dem Erzeugen jeweils einer Tiefenkarte der Stereoskopieeinheit (26) alternierend nur einen Teil der Vielzahl zu prüfen.

14. Stereokamera (10) nach einem der vorhergehenden Ansprüche, die einen Sicherheitsausgang (34) aufweist, wobei die Prüfeinheit (28) dafür ausgebildet ist, über den Sicherheitsausgang (34) ein Absicherungssignal auszugeben, wenn die Funktionsfähigkeit der beiden Bildsensoren (16a-b) nicht gegeben ist.

15. Verfahren zum Prüfen der Funktionsfähigkeit der Bildsensoren (16a-b) einer Stereokamera (10), die mit einem ersten Bildsensor (16a) ein erstes Rohbild (36a) und mit einem zweiten Bildsensor (16b) ein zweites Rohbild (36b) eines Überwachungsbereichs (12) aus gegeneinander versetzter Perspektive aufnimmt und aus den beiden Rohbildern (36a-b) mit einem stereoskopischen Verfahren eine Tiefenkarte erzeugt,
**dadurch gekennzeichnet**,
zum Erkennen von Fehlern der Bildsensoren (16a-b) erste Bildinformationen aus einem ersten Bildfenster (40a) des ersten Rohbildes (36a) mit zweiten Bildinformationen aus einem zweiten Bildfenster (40b) des zweiten Rohbildes (36b) verglichen und die Bildfenster (40a-b) anhand von Informationen der Stereoskopieeinheit (26) beim Erzeugen der Tiefenkarte ausgewählt werden.

**Claims**

1. A safe stereo camera (10) which has at least a first image sensor (16a) for recording a first raw image (36a) and a second image sensor (16b) for recording a second raw image (36b) of a monitoring region (12) from a perspective offset relative to one another, a stereoscopy unit (26) for generating a depth map from the two raw images (36a-b) and a test unit (28) for checking the operability of the image sensors (16a-b),
**characterized in that** the test unit (28) is adapted to compare first image information from a first image window (40a) of the first raw image (36a) with second image information from a second image window (40b) of the second raw image (36b) for detecting errors of the image sensors (16a-b), and to select the image windows (40a-b) on the basis of information from the stereoscopy unit (26) when generating the depth map.

2. The stereo camera (10) according to claim 1, wherein the first image window (40a) and the second image window (40b) have an offset with respect to each other which corresponds to the disparity determined by the stereoscopy unit (26) when generating the depth map for at least one pixel of the image windows (40a-b).

3. The stereo camera (10) according to claim 1 or 2,
wherein the test unit (28) is configured to test the operability of the image sensor (16a-b) in real time, in particular during the generation of the depth map by the stereoscopy unit (26).

4. The stereo camera (10) according to one of the previous claims,
wherein the test unit (28) is configured to compare individual pixel values with each other and to evaluate the deviation individually.

5. The stereo camera (10) according to one of the previous claims,
wherein the test unit (28) is configured to compare the image information with a sum measure over at least some of the pixels of the image windows (40a-b).

6. The stereo camera (10) according to claim 5,
wherein the sum measure is formed from differences of pixel values or from differences of pixel values of adjacent pixels of the two raw images (36a-b).

7. The stereo camera (10) according to one of the previous claims,
wherein the test unit (28) is configured to generate at least one image feature each from the first and second image information and to compare the image information with each other on the basis of the image features.

8. The stereo camera (10) according to one of the previous claims,
wherein the test unit (28) is configured to compare deviations between the first image information and the second image information with a noise threshold.

9. The stereo camera (10) according to one of the previous claims,
wherein the test unit (28) is configured to log deviations detected by the comparison between the first image information and the second image information and to consider them as errors only upon repeated occurrence.

10. The stereo camera (10) according to one of the previous claims,
wherein a preprocessing unit (24) is provided for rectifying and/or smoothing the raw image data for the stereoscopy unit (26).

11. The stereo camera (10) according to one of the previous claims,
wherein the test unit (28) is configured to compare a pixel (42), which is detected as possibly erroneous by the comparison of the image information, with its neighborhood in both raw images (36a-b) and to associate the error with the image sensor (16a-b) in which the larger differences occur.

12. The stereo camera (10) according to one of the previous claims,
wherein the test unit (28) is configured to test based on a plurality of first image windows (40a) and second image windows (40b) which together form at least the safety-relevant region of the image sensors (16a-b), wherein in particular the safety-relevant region is statically or dynamically fixed to only a part of the image sensors (16a-b).

13. The stereo camera (10) according to claim 12,
wherein the test unit (28) is configured to only test an alternating portion of the plurality of image windows (40a-b) when generating a respective depth map of the stereoscopy unit (26).

14. The stereo camera (10) according to one of the previous claims,
which has a safety output (34), wherein the test unit (28) is configured to output a safety signal via the safety output (34) in case the operability of the two image sensors (16a-b) cannot be validated.

15. A method for testing the operability of the image sensors (16a-b) of a stereo camera (10) which takes a first raw image (36a) of a monitoring region (12) with a first image sensor (16a) and a second raw image (36b) of the monitoring region (12) with a second image sensor (16b) from a perspective offset with respect to one another and generates a depth map from the two raw images (36a-b) with a stereoscopic method,
**characterized in that** for detecting errors of the image sensors (16a-b) first image information from a first image window (40a) of the first raw image (36a) is compared with second image information from a second image window (40b) of the second raw image (36b) and the image windows (40a-b) are selected on the basis of information from the stereoscopy unit (26) when generating the depth map.

**Revendications**

1. Caméra stéréo sécurisée (10) comportant au moins un premier capteur d'image (16a) pour l'enregistrement d'une première image brute (36a) et un second capteur d'image (16b) pour l'enregistrement d'une seconde image brute (36b) d'une zone à surveiller (12) à partir de perspectives décalées l'une par rapport à l'autre, une unité de stéréoscopie (26) pour générer une carte de profondeur à partir des deux images brutes (36a - b) et une unité de vérification (28) pour vérifier la capacité de fonctionnement des capteurs d'image (16a - b),
**caractérisée en ce que**
l'unité de vérification (28) est réalisée pour comparer des premières informations d'image provenant d'une première fenêtre d'image (40a) de la première image brute (36a) avec des secondes informations d'image provenant d'une seconde fenêtre d'image (40b) de la seconde image brute (36a), afin de reconnaître des défauts des capteurs d'image (16a - b), et pour sélectionner les fenêtres d'image (40a - b) en se basant sur des informations de l'unité de stéréoscopie (26), lors de la génération de la carte de profondeur.

2. Caméra stéréo (10) selon la revendication 1,
dans laquelle la première fenêtre d'image (40a) et la seconde fenêtre d'image (40b) présentent un décalage l'une par rapport à l'autre qui correspond à la disparité, déterminée par l'unité de stéréoscopie (26) lors de la génération de la carte de profondeur, pour au moins un pixel de la fenêtre d'image (40a - b).

3. Caméra stéréo (10) selon la revendication 1 ou 2,
dans laquelle l'unité de vérification (28) est réalisée pour vérifier la capacité de fonctionnement du capteur d'image (16a - b) en temps réel, en particulier pendant la génération de la carte de profondeur par l'unité de stéréoscopie (26).

4. Caméra stéréo (10) selon l'une des revendications précédentes,
dans laquelle l'unité de vérification (28) est réalisée pour comparer des valeurs de pixel individuelles les unes avec les autres et pour évaluer individuellement l'écart.

5. Caméra stéréo (10) selon l'une des revendications précédentes,
dans laquelle l'unité de vérification (28) est réalisée pour comparer l'information d'image par une somme sur quelques-uns au moins des pixels des fenêtres d'image (40a - b).

6. Caméra stéréo (10) selon la revendication 5,
dans laquelle la somme est formée par des différences dans des valeurs de pixel ou par des différences dans les valeurs de pixels voisins des deux images brutes (36a - b).

7. Caméra stéréo (10) selon l'une des revendications précédentes,
dans laquelle l'unité de vérification (28) est réalisée pour générer respectivement au moins une caractéristique d'image à partir des premières et des secondes informations d'image et pour comparer les informations d'image les unes avec les autres sur la base des caractéristiques d'image.

8. Caméra stéréo (10) selon l'une des revendications précédentes,
dans laquelle l'unité de vérification (28) est réalisée pour comparer des écarts entre la première information d'image et la seconde information d'image avec un seuil de bruit.

9. Caméra stéréo (10) selon l'une des revendications précédentes,
dans laquelle l'unité de vérification (28) est réalisée pour journaliser des écarts détectés par la comparaison entre la première information d'image et la seconde information d'image et pour les évaluer en tant que défauts seulement s'ils se répètent.

10. Caméra stéréo (10) selon l'une des revendications précédentes,
dans laquelle il est prévu une unité de prétraitement (24) pour égaliser et/ou lisser les données d'images brutes pour l'unité de stéréoscopie (26).

11. Caméra stéréo (10) selon l'une des revendications précédentes,
dans laquelle l'unité de vérification (28) est réalisée pour comparer un pixel (42), détecté comme éventuellement défectueux par la comparaison des informations d'image, avec son voisinage dans les deux images brutes (36a - b) et pour affecter le défaut au capteur d'image (16a - b) dans lequel apparaissent les différences les plus importantes.

**12.** Caméra stéréo (10) selon l'une des revendications précédentes,
dans laquelle l'unité de vérification (28) est réalisée pour vérifier sur la base d'une multitude de premières fenêtres d'image (40a) et de secondes fenêtres d'image (40b) qui forment conjointement au moins la zone de sécurité des capteurs d'image (16a - b), la zone de sécurité étant en particulier fixée de manière statique ou dynamique sur seulement une partie des capteurs d'image (16a - b).

**13.** Caméra stéréo (10) selon la revendication 12,
dans laquelle l'unité de vérification (28) est réalisée pour ne vérifier qu'une partie de ladite multitude en alternance avec la génération d'une carte de profondeur respective de l'unité de stéréoscopie (26).

**14.** Caméra stéréo (10) selon l'une des revendications précédentes, comportant une sortie de sécurité (34), l'unité de vérification (28) étant réalisée pour émettre un signal de sécurisation via la sortie de sécurité (34) si la capacité de fonctionnement des deux capteurs d'image (16a - b) n'est pas assurée.

**15.** Procédé pour vérifier la capacité de fonctionnement des capteurs d'image d'une caméra stéréo (10) qui enregistre une première image brute (36a) par un premier capteur d'image (16a) et qui enregistre une seconde image brute (36b) d'une zone à surveiller (12) par un second capteur d'image (16b) à partir de perspectives décalées l'une par rapport à l'autre, et qui génère une carte de profondeur à partir des deux images brutes (36a - b) par un procédé stéréoscopique,
**caractérisé en ce que**
pour détecter des défauts des capteurs d'image (16a - b), des premières informations d'image provenant d'une première fenêtre d'image (40a) de la première image brute (36a) sont comparées avec des secondes informations d'image provenant d'une seconde fenêtre d'image (40b) de la seconde image brute (36b), et les fenêtres d'image (40a - b) sont sélectionnées en se basant sur des informations de l'unité de stéréoscopie (26) lors de la génération de la carte de profondeur.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1472890 B1
- US 9712768 B2
- US 8953047 B2

- DE 102014201161 A1
- EP 1367314 B1
- JP 2001211466 A